# DEMANDE DE BREVET EUROPEEN

(11) **EP 1 997 970 A1**
(43) Date de publication de la demande: **03.12.2008**
(21) Numéro de dépôt: 08356072.2
(22) Date de dépôt: 28.05.2008
(51) Int. Cl.: E03F 1/00

(54) **Système de récupération d'eau**

(30) Priorité: 30.05.2007 FR 0703821
(71) Demandeur: Sogemap Injection, 17290 Aigrefeuille d'Aunis (FR)
(72) Inventeur: Guicherd, Michel, 17290 Ardillieres (FR)
(74) Mandataire: Maureau, Philippe

(57) **Abrégé**

L'invention concerne un système de récupération d'eau, comportant au moins une première (29) et une seconde (32) cellules de récupération d'eau, le système de récupération d'eau comportant une plaque de renfort (27), disposée entre les première et seconde cellules (29, 32) et comportant une première face (28), destinée à l'appui d'une première cellule (29), et une seconde face (30) présentant au moins une zone d'appui (31), destinée à l'appui de la seconde cellule (32), la plaque (27) présentant au moins un premier logement (37) débouchant au niveau de la première face (28), coopérant avec une extrémité (16) d'au moins une colonne (12) de la première cellule (29), caractérisée en ce que la seconde face (30) présente au moins une zone en saillie (33) dans laquelle est ménagé au moins un second logement (36), coopérant avec l'extrémité (14) d'au moins une colonne (12) de la seconde cellule (32).

## Description

L'invention concerne un système de récupération d'eau.

Les cellules de récupération d'eau sont destinées à former un système de récupération d'eau par empilement des cellules les unes sur les autres, les piles ainsi formées étant disposées de manière adjacente dans un espace creusé dans le sol puis recouvertes d'un remblai. Le système de récupération d'eau est généralement surmonté d'une nappe géotextile évitant l'entrée de terre dans lesdites cellules.

Selon une première utilisation, la surface ainsi obtenue au-dessus du système de récupération d'eau peut par exemple servir de parking. Les eaux de pluie qui se retrouvent collectées dans les cellules peuvent être dirigées vers un système d'égouts, via des conduites connectées aux cellules. En variante, les eaux de pluie peuvent être temporairement récupérées dans les cellules jusqu'à leur absorption naturelle par la terre environnante.

Selon une deuxième utilisation, le système de récupération d'eau est enveloppé d'une membrane étanche qui permet la rétention d'eau dans les cellules. On obtient ainsi un bassin enterré dans lequel l'eau peut être stockée en vue de son utilisation ultérieure (par exemple pour l'arrosage), par l'intermédiaire d'un système de conduites. Ceci présente de nombreux avantages par rapport à un bassin de rétention à ciel ouvert, notamment en termes de sécurité.

Une cellule de récupération d'eau est connue du document EP 1 743 984. Celle-ci comporte une paroi latérale définissant un volume intérieur parallélépipédique et dans laquelle sont ménagés des orifices, ainsi qu'une pluralité de colonnes s'étendant verticalement, chaque colonne possédant une hauteur sensiblement égale à celle de la paroi latérale et étant sensiblement logée dans le volume intérieur. Chaque colonne comprend une première extrémité équipée d'un téton en saillie par rapport au plan général supérieur de la cellule et une seconde extrémité creuse, disposée sensiblement selon le plan général inférieur de la cellule. Les cellules sont empilées les unes sur les autres de sorte que les colonnes soient disposées les unes en regard des autres, les tétons d'une cellule inférieure étant insérés dans les secondes extrémités d'une cellule supérieure.

Les colonnes sont ainsi disposées bout à bout, le mouvement des cellules d'une même pile étant alors limité.

Comme vu précédemment, après assemblage, les cellules forment un système de récupération d'eau permettant de supporter des pressions verticales, orientées selon l'axe des colonnes.

Toutefois, un tel système de récupération d'eau est également soumis à des pressions latérales exercées par le terrain. Il a été estimé que de telles pressions peuvent avoisiner 30 000 N/m².

Ce type de système de récupération d'eau peut avoir tendance à s'écraser sous le poids des pressions latérales, de sorte que la surface disposée au-dessus des cellules peut avoir tendance à s'affaisser.

Afin de limiter cet inconvénient, il est connu de disposer des plaques de renfort entre les cellules.

Une telle plaque de renfort comporte généralement une première face, destinée à l'appui d'une première cellule, et une seconde face présentant au moins une zone d'appui destinée à l'appui d'une seconde cellule, la plaque présentant au moins un premier logement débouchant au niveau de la première face, destiné à coopérer avec une extrémité d'au moins une colonne de la première cellule.

La seconde face de la plaque inférieure permet simplement l'appui des colonnes de la seconde cellule.

Ainsi, lorsque les cellules sont disposées en pile les unes par rapport au autres, le glissement de la première cellule par rapport à la seconde n'est pas empêché.

Un tel manque de rigidité entraîne un déplacement des cellules les unes par rapport aux autres, provoquant notamment une déformation de la surface disposée au-dessus du système de récupération d'eau ainsi qu'un déchirement de la membrane étanche permettant la rétention d'eau dans ledit système.

L'invention vise à remédier à ces inconvénients en proposant un système de récupération d'eau, comportant au moins une première et une seconde cellules de récupération d'eau, le système de récupération d'eau comportant une plaque de renfort, disposée entre les première et seconde cellules et comportant une première face, destinée à l'appui d'une première cellule, et une seconde face présentant au moins une zone d'appui, destinée à l'appui de la seconde cellule, la plaque présentant au moins un premier logement débouchant au niveau de la première face, coopérant avec une extrémité d'au moins une colonne de la première cellule, caractérisée en ce que la seconde face présente au moins une zone en saillie dans laquelle est ménagé au moins un second logement, coopérant avec l'extrémité d'au moins une colonne de la seconde cellule. Chaque plaque de renfort comporte ainsi au moins une première et seconde ouvertures coopérant respectivement avec les extrémités correspondantes des colonnes d'une première et d'une seconde cellule.

Le mouvement latéral de la première cellule par rapport à la seconde est alors empêché, conférant ainsi une bonne rigidité au système de récupération d'eau.

Ce type de plaque s'adapte en outre aux cellules déjà existantes, notamment du type de celles décrites dans le document EP 1 743 984 précité.

Ainsi, en fonction des applications, les cellules de ce type peuvent être empilées avec interposition ou non de plaques de renfort.

Avantageusement, les premier et second logements sont disposés dans le prolongement l'un de l'autre.

Cette caractéristique permet une meilleure transmission des efforts d'une colonne à une autre.

Selon une caractéristique de l'invention, la zone en saillie est disposée sensiblement au centre de la plaque, la zone d'appui formant un épaulement périphérique.

La zone d'appui périphérique est alors adaptée au support d'un cadre périphérique de la seconde cellule, la zone centrale en saillie venant coopérer avec une ou plusieurs colonnes disposées à l'intérieur du cadre précité.

Préférentiellement, la plaque présente une structure de type nid d'abeille délimitant une pluralité de logements de forme générale hexagonale.

Ce type de structure facilite le passage de l'eau tout en apportant une rigidité suffisante.

Selon une possibilité de l'invention, la plaque comporte des trous destinés à l'engagement de tenons complémentaires appartenant aux cellules.

De cette manière, la plaque de renfort peut être fixée de manière définitive à l'une des cellules par soudage à ultrasons, augmentant encore la rigidité de l'ensemble.

Avantageusement, la plaque est équipée de moyens de liaison à au moins une autre plaque de renfort.

Les moyens de liaison permettent de limiter les mouvements d'une pile de cellules par rapport à une autre.

Selon une caractéristique de l'invention, la plaque comporte des découpes formant logement pour au moins une partie des moyens de liaison.

Cette caractéristique permet d'augmenter la compacité du système de récupération d'eau et évite de prévoir des découpes ou logements spécifiques dans les cellules classiques.

Préférentiellement, les moyens de liaison comportent des moyens d'encliquetage aptes à coopérer avec des moyens d'encliquetage complémentaires des plaques et/ou des cellules correspondantes.

Selon une possibilité de l'invention, les moyens de liaison comportent au moins une ouverture, destinée à accueillir au moins un tenon de forme générale complémentaire, faisant saillie depuis au moins une des première et seconde cellules.

Cette caractéristique permet d'augmenter la rigidité du système de récupération d'eau.

De toute façon, l'invention sera bien comprise à l'aide de la description qui suit, en référence au dessin schématique annexé représentant, à titre d'exemple non limitatif, une forme d'exécution de ce système de récupération d'eau.
Figures 1 et 2 sont des vues en perspective, respectivement de dessus et dessous, d'une cellule de récupération d'eau ;
Figure 3 est une vue de face d'une variante de réalisation de la cellule;
Figure 4 et 5 sont des vues en perspective, respectivement de dessus et dessous, d'une plaque de renfort selon l'invention ;
Figure 6 est une vue de face d'une cellule équipée d'une plaque de renfort ;
Figure 7 est une vue en perspective, de dessus, d'un système de récupération d'eau selon l'invention ;
Figure 8 est une vue schématique partielle, en coupe selon la ligne VIII - VIII, d'un système de récupération d'eau ;
Figure 9 représente le montage des moyens de liaison sur quatre cellules adjacentes ;
Figure 10 et 11 sont des vues en perspective, respectivement de dessus ou de dessous, des moyens de liaison.

Dans la description qui suit, on s'intéressera tout d'abord à la structure d'une cellule classique de récupération d'eau, puis à celle d'une plaque de renfort selon l'invention. On s'intéressera enfin au montage des cellules les unes par rapport aux autres afin de réaliser un système de récupération d'eau.

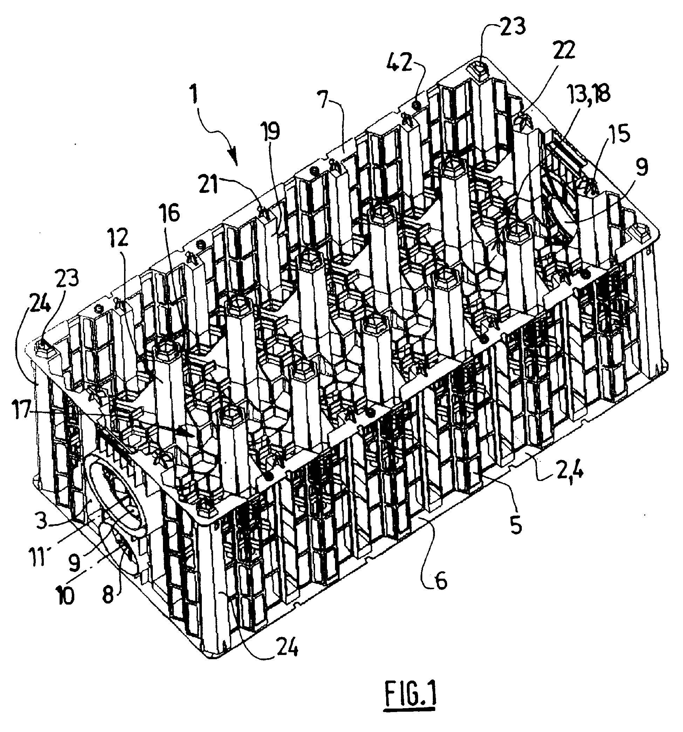

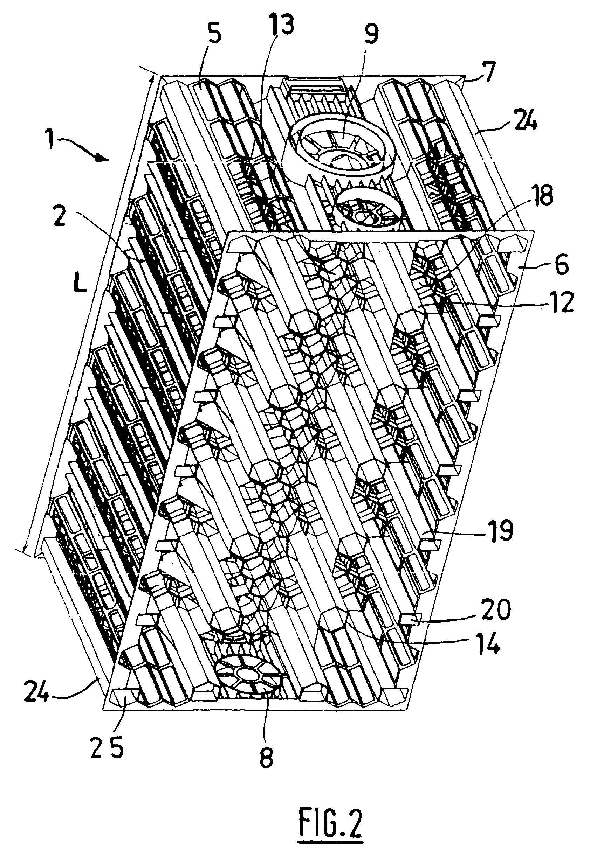

Les figures 1 et 2 représentent une cellule de récupération d'eau 1 classique comprenant une paroi latérale 2 définissant un volume intérieur sensiblement parallélépipédique. La paroi latérale 2 comporte quatre côtés, à savoir deux petits côtés 3 et deux grands côtés 4, tous pourvus d'orifices 5 pour le passage de l'eau.

La cellule 1 est destinée à être positionnée de façon que les côtés 3, 4 soient sensiblement verticaux, et c'est dans cette position qu'elle sera décrite pour plus de commodité. On définit la direction « longitudinale » comme la direction horizontale sensiblement parallèle aux grands côtés 4 de la paroi latérale 2.

Les côtés supérieur et inférieur de la cellule 1 sont ouverts. La paroi latérale 2 présente ainsi un bord inférieur 6 et un bord supérieur 7 sensiblement plans et horizontaux.

Dans chacun des petits côtés 3 sont ménagées une première et une deuxième ouvertures 8, 9 circulaires dont les axes 10, 11 sont longitudinaux, situés à égale distance des grands côtés 4, et alignés verticalement. La première ouverture 8 est située sous la deuxième ouverture 9, et présente un diamètre moindre. Les premières ouvertures 8 des deux petits côtés 3 présentent le même axe 10, et les deuxièmes ouvertures 9 des deux petits côtés 3 présentent le même axe 11.

La cellule 1 comporte également une pluralité de colonnes 12 sensiblement verticales, liées entre elles et à la paroi latérale 2 par une cloison intermédiaire 13 sensiblement horizontale et située à mi hauteur de la cellule 1.

Les colonnes 12 comprennent une extrémité inférieure 14 située sensiblement dans le même plan que le bord inférieur 6 de la paroi latérale 2 et une extrémité supérieure 15 située sensiblement dans le même plan que le bord supérieur 7 de la paroi latérale 2, mais de laquelle fait saillie un téton 16, au-delà du volume intérieur parallélépipédique de la cellule 1. Les colonnes 12 présentent une section transversale sensiblement hexagonale creuse sur toute leur hauteur, l'extrémité inférieure 14 de chaque colonne 12 étant ouverte.

Dans la réalisation représentée, la cellule 1 comporte deux séries longitudinales de colonnes 12 disposées de part et d'autre des axes 10, 11, et définissant un passage 17 longitudinal sensiblement central débouchant dans les deuxièmes ouvertures 9. Chaque série comporte ici sept colonnes 12 régulièrement espacées, les colonnes 12 des extrémités n'étant pas totalement isolées mais liées par une portion verticale à un petit côté 3 de la paroi latérale 2.

La cloison intermédiaire 13 est formée d'un réseau en nid d'abeille, et comporte donc une pluralité d'orifices 18.

Les grands côtés 4 de la paroi latérale 2 présentent chacun des montants 19 verticaux en saillie vers l'intérieur de la cellule 1. Les montants 19 présentent une section rectangulaire et sont situés entre deux colonnes 12. Leur extrémité inférieure forme une cavité 20 et leur extrémité supérieure, située dans le plan du bord supérieur 7 de la paroi latérale 2, porte un ergot 21 en croix de dimensions correspondantes à celles de la cavité 20. Un ergot 22 similaire, mais en étoile, fait saillie au-dessus du bord supérieur 7 de la paroi latérale 2 depuis l'extrémité supérieure 15 de chacune des colonnes 12 liées aux petits côtés 3.

Enfin, un tenon 23 fait saillie du bord supérieur 7 de la paroi latérale 2 à chaque coin de la cellule 1, en partie supérieure d'un montant d'angle 24 dont l'extrémité inférieure forme une cavité 25.

L'ensemble de la cellule 1 (paroi latérale 2, colonnes 12, cloison intermédiaire 13, etc.) est réalisé d'une seule pièce par moulage par injection d'une polyoléfine telle que le polypropylène ou le polyéthylène haute densité.

La cellule 1 ainsi obtenue possède approximativement les dimensions suivantes :
- hauteur H : 50 cm ;
- longueur L : 120 cm ;
- largeur ℓ: 60 cm.

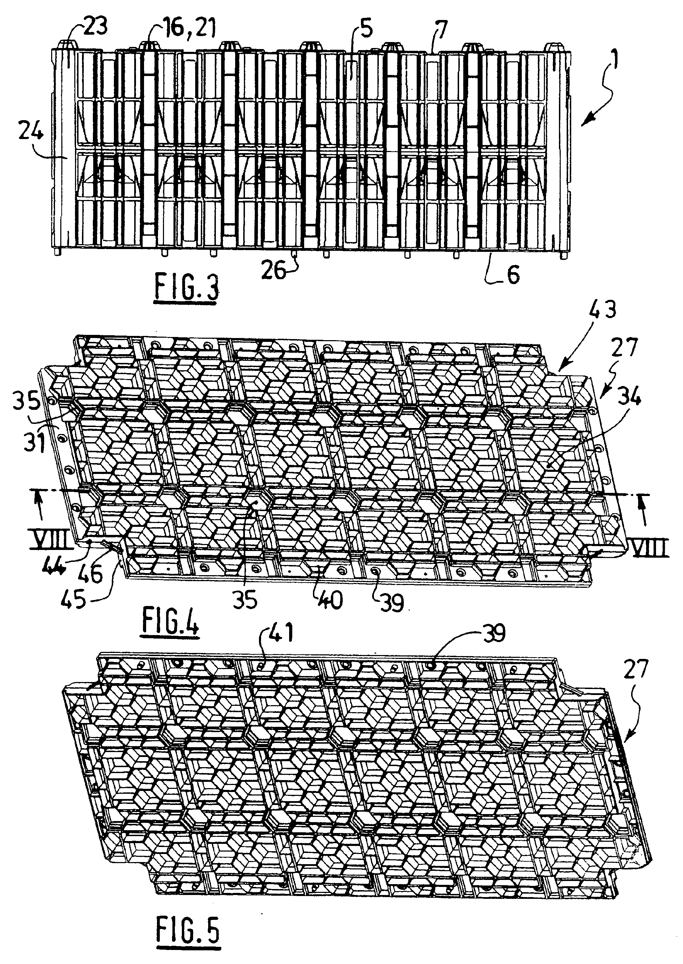

Selon une variante de réalisation représentée en figure 3, la cellule comporte des tenons de soudage 26 faisant saillie depuis le bord inférieur 6.

Les figures 4, 5 et 8 représentent une plaque de renfort 27 selon l'invention. Celle-ci est de forme générale rectangulaire et comporte une face inférieure 28, destinée à l'appui d'une cellule inférieure 29, une face supérieure 30 présentant une zone d'appui 31 périphérique, destinée à l'appui d'une cellule supérieure 32, et une zone centrale en saillie 33.

La plaque 27 présente une structure de type nid d'abeille délimitant une pluralité d'ouvertures hexagonales 34 permettant le passage de l'eau.

Parmi celles-ci 34, certaines ouvertures 35 sont destinées à coopérer avec les colonnes 12 des cellules inférieure et supérieure 29, 32.

Chaque ouverture 35 comporte une section supérieure 36 et une section inférieure 37, l'ouverture étant de dimension plus importante au niveau de la section supérieure 36. Chaque ouverture délimite, entre la section supérieure 36 et la section inférieure 37, un épaulement 38 formant butée pour l'extrémité inférieure 14 de la colonne 12 correspondante, comme cela est décrit ci-après.

Les dimensions des sections supérieure 36 et inférieure 37 correspondent respectivement aux dimensions de l'extrémité inférieure 14 et du téton 16 de deux colonnes 12 superposées.

La plaque 27 comporte en outre des trous 39 destinés au passage des tenons 26 de la cellule supérieure, ainsi que des ouvertures 40 destinés au logement des ergots de la cellule inférieure, ménagés au niveau de la zone d'appui périphérique 31.

La plaque présente également des plots de centrage 41, représentés plus particulièrement en figure 5, faisant saillie depuis la face inférieure 28 et destiné à coopérer avec des ouvertures de centrage 42 ménagées dans le bord supérieur 7 de la cellule correspondante, comme cela est représenté en figure 1.

La plaque 27 présente de plus une encoche 43 ménagée dans chaque coin de la plaque 27, chaque encoche étant par une première 44 et une seconde 45 parois d'encoche reliées l'une à l'autre par une barrette d'encliquetage 46.

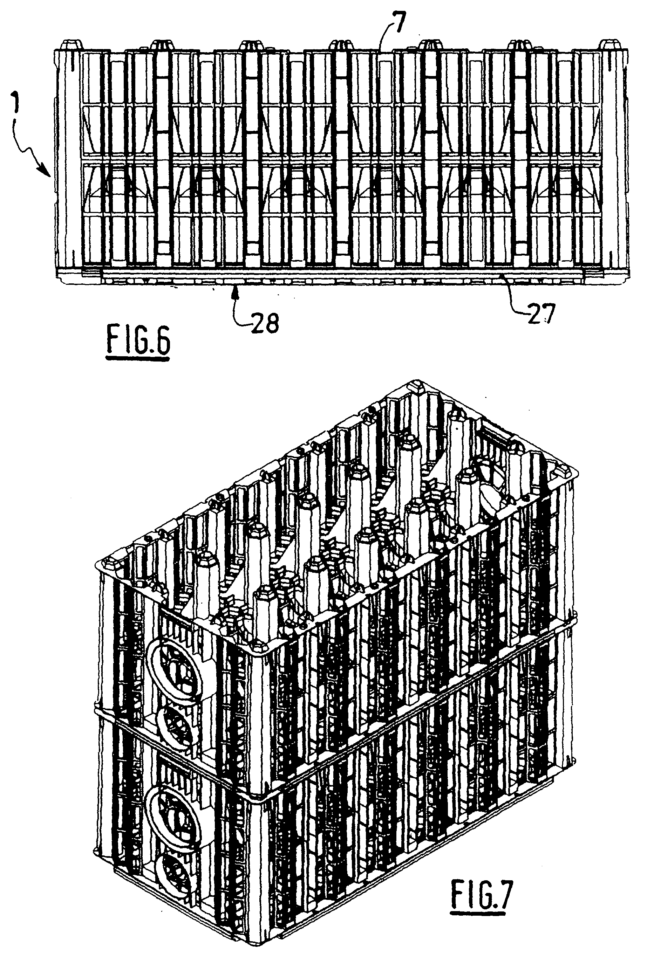

La figure 6 représente le montage d'une plaque de renfort 27 sur une cellule 1.

La plaque de renfort 27 est montée sur le bord inférieur 6 de la cellule 1 et la plaque 27 est solidarisée à la cellule 1 par souage à ultrasons des tenons 26 dans les trous 39 correspondants. Un tel montage est préférentiellement réalisé en usine de sorte que les cellules 1 et plaques de renfort 27 prémontées puissent être rapidement mise en place lors d'un chantier.

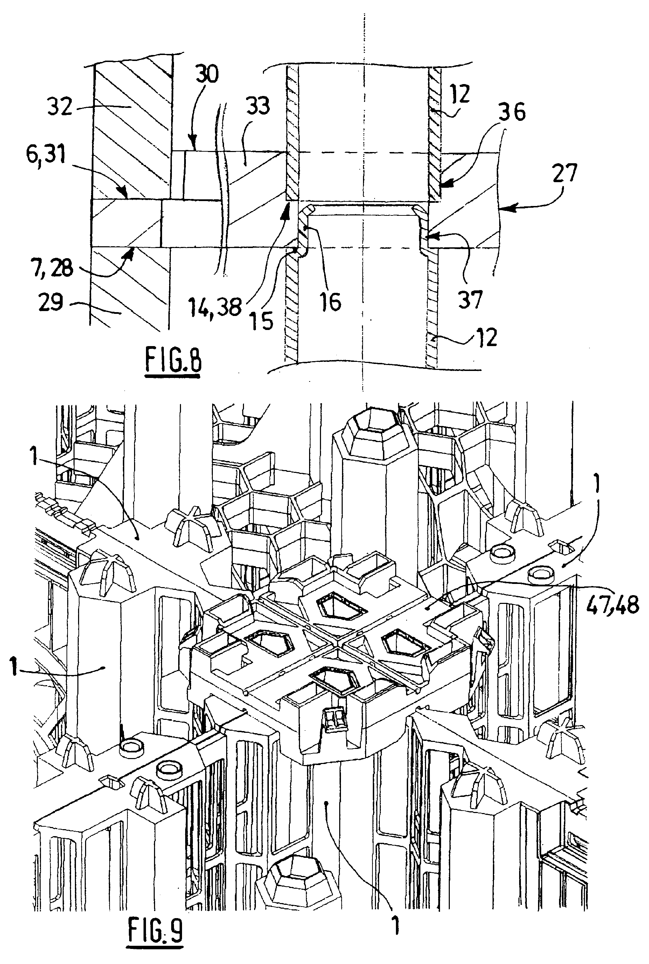

Les figures 7 et 8 représentent le montage des cellules inférieure 29 et supérieure 32 par l'intermédiaire d'une plaque de renfort 27.

Comme cela apparaît plus particulièrement en figure 8, la plaque 27 repose, au niveau de sa face inférieure 28, sur le bord supérieur 7 de la cellule inférieure 29. En outre, la cellule supérieure 32 repose sur la zone d'appui 31 de la plaque 27, cette zone 31 formant un décrochement facilitant le positionnement de la cellule supérieure 32 sur la plaque 27.

Le téton 16 de chaque colonne 12 est inséré dans la section inférieure 37 de l'ouverture correspondante jusqu'à ce que l'extrémité supérieure 15 de la colonne 12, délimitant un épaulement avec le téton, soit en appui contre la surface inférieure 28 de la plaque 27. De même, l'extrémité inférieure 14 de chaque colonne est insérée dans la section supérieure 36 correspondante, de manière à venir en butée contre l'épaulement 38.

Les cellules 1, 29, 32 sont ainsi disposées en pile, le nombre de cellules par pile étant dépendant des dimensions du système de récupération d'eau à réaliser.

Le système de récupération d'eau est constitué d'une ou plusieurs piles disposées côte à côte.

Afin d'assurer la stabilité des piles les unes par rapport aux autre, les plaques 27 sont équipées de moyens de liaison 47 représentés aux figures 9 à 11.

Les moyens de liaison 47 se présentent sous la forme d'un élément de forme générale carrée, composé de quatre zones de liaison 48. Chaque zone 48 est destinée à être logée dans une encoche 43 d'une plaque de renfort 27 et à coopérer avec un coin d'une cellule 1.

Un élément de liaison permet donc de relier quatre cellules adjacentes et plaques adjacentes de renfort, comme cela est représenté plus particulièrement à la figure 9.

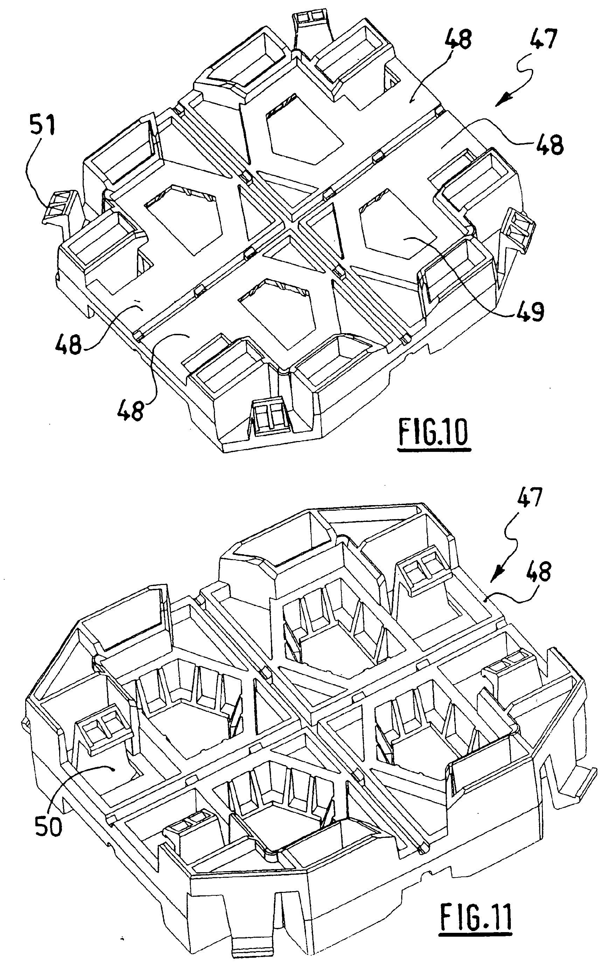

Chaque zone de liaison 48 comporte une ouverture 49 destinée à accueillir le tenon 23 correspondant de la cellule inférieure ainsi qu'un premier crochet d'encliquetage 50, représenté plus particulièrement en figure 11, destiné à coopérer avec le bord supérieur 7 de la cellule inférieure 29.

Chaque zone 48 comporte en outre un second crochet d'encliquetage 51, destiné à coopérer avec la barrette d'encliquetage correspondante 46. Pour des raisons de lisibilité du dessin, les plaques 27 n'ont pas été représentées à la figure 9.

L'élément de liaison 47 et la plaque de renfort 27 sont tous deux réalisés en un matériau similaire à celui des cellules 1.

Bien entendu, les différents éléments destinés à coopérer lors de l'empilement de deux cellules présentent des formes et des dimensions complémentaires permettant un emboîtement aisé mais un maintien efficace des deux cellules par rapport à la plaque de renfort correspondante.

On obtient ainsi un excellent positionnement des cellules 1 les unes par rapport aux autres et une bonne rigidité du système récupération d'eau.

Lors de la réalisation du système de récupération d'eau, il est possible de prévoir une plaque de renfort 27 formant élément de fermeture, au-dessus des cellules 1 situées en partie supérieure de chaque pile.

Dans ce cas, cette plaque de renfort 27 n'est pas prémontée à une cellule 1.

Il va de soi que l'invention n'est pas limitée à la forme de réalisation décrite ci-dessus à titre d'exemple mais qu'elle en embrasse au contraire toutes les variantes de réalisation.

## Revendications

1. Système de récupération d'eau, comportant au moins une première (29) et une seconde (32) cellules de récupération d'eau, le système de récupération d'eau comportant une plaque de renfort (27), disposée entre les première et seconde cellules (29, 32) et comportant une première face (28), destinée à l'appui d'une première cellule (29), et une seconde face (30) présentant au moins une zone d'appui (31), destinée à l'appui de la seconde cellule (32), la plaque (27) présentant au moins un premier logement (37) débouchant au niveau de la première face (28), coopérant avec une extrémité (16) d'au moins une colonne (12) de la première cellule (29), **caractérisée en ce que** la seconde face (30) présente au moins une zone en saillie (33) dans laquelle est ménagé au moins un second logement (36), coopérant avec l'extrémité (14) d'au moins une colonne (12) de la seconde cellule (32).

2. Système selon la revendication 1, **caractérisé en ce que** les premier (37) et second (36) logements sont disposés dans le prolongement l'un de l'autre.

3. Système selon la revendication 1, **caractérisé en ce que** la zone en saillie (33) est disposée sensiblement au centre de la plaque (27), la zone d'appui (31) formant un épaulement périphérique.

4. Système selon l'une des revendications 1 à 3, **caractérisé en ce que** la plaque présente une structure de type nid d'abeille délimitant une pluralité de logements (35) de forme générale hexagonale.

5. Système selon l'une des revendications 1 à 4, **caractérisé en ce que** la plaque comporte des trous (39) destinés à l'engagement de tenons complémentaires (26) appartenant aux cellules.

6. Système selon l'une des revendications 1 à 5, **caractérisé en ce que** la plaque est équipée de moyens de liaison (47) à au moins une autre plaque de renfort (27).

7. Système selon la revendication 6, **caractérisé en ce que** la plaque comporte des découpes (43) formant logement pour au moins une partie (48) des moyens de liaison (47).

8. Système selon l'une des revendications 6 et 7, **caractérisé en ce que** les moyens de liaison (47) comportent des moyens d'encliquetage (50, 51) aptes à coopérer avec des moyens d'encliquetage complémentaires des plaques (27) et/ou des cellules (1) correspondantes.

9. Système selon l'une des revendications 6 à 8, **caractérisé en ce que** les moyens de liaison (47) comportent au moins une ouverture (49), destinée à accueillir au moins un tenon (23) de forme générale complémentaire, faisant saillie depuis au moins une des première (29) et seconde (32) cellules.
